# EUROPÄISCHE PATENTANMELDUNG

(11) **EP 0 848 442 A1**
(43) Veröffentlichungstag der Anmeldung: **17.06.1998**
(21) Anmeldenummer: 97118898.2
(22) Anmeldetag: 30.10.1997
(51) Int. Cl.: H01M 10/18

(54) **Bleiakkumulator mit bipolaren Elektroden**

(30) Priorität: 14.12.1996 DE 19652177
(71) Anmelder: VARTA Batterie Aktiengesellschaft, 30419 Hannover (DE)
(72) Erfinder: Salamon, Klaus, Dr., 60598 Frankfurt (DE)
(74) Vertreter: Kaiser, Dieter Ralf, Dipl.-Ing.

(57) **Zusammenfassung**

Bei einem Bleiakkumulator bestehen die bipolaren Elektroden aus einem Träger aus elektrisch nichtleitendem Material mit einer Öffnung, durch die ein positives Stromableitergerüst auf einer Seite des Trägers mit dem negativen Stromableitergerüst auf der anderen Seite des Trägers leitend verbunden ist und bei dem die beiden Seiten des Trägers mit einer einpastierten positiven bzw. negativen Masse versehen sind. Die leitenden Stromableitergerüste bestehen aus einer gegossenen Gitterstruktur oder einem Bleistreckmetall und die leitfähigen Stromableitergerüste sind durch mindestens eine Öffnung des nichtleitenden Trägers hindurch miteinander verschweißt. Zur Herstellung der Verbindung dient insbesondere ein Widerstands-Schweißverfahren.

## Beschreibung

Bipolare Elektroden für Bleiakkumulatoren sind in den verschiedensten Ausführungsformen bekannt, beispielsweise ist der WO 93/01624 eine bipolare Elektrodenanordnung zu entnehmen, bei der die Einheitszelle aus einem nichtleitendem, porösen Material besteht, auf dessen eine Seite positive aktive Masse und auf dessen andere Seite negative aktive Masse aufgebracht ist. Die positive und negative aktive Masse ist dadurch miteinander verbunden, daß die durchgehenden Poren des nichtleitfähigen Trägers mit Blei gefüllt sind.

Der WO 94/29923 ist eine bipolare Bleiakkumulatorelektrode zu entnehmen, die einen leitfähigen Träger besitzt, auf dessen beide Seiten positive bzw. negative aktive Massen aufgebracht sind. Der leitfähige Träger besteht dabei aus einem Material mit geringem Widerstand, beispielsweise aus Kupfer oder Silber, welches mit Titan bedeckt ist, das unter den Bedingungen des Bleiakkumulators korrosionsstabil ist.

Der DE-A 43 00 763 ist ebenfalls ein Bleiakkumulator mit bipolaren Elektroden zu entnehmen. Als Träger für die positive aktive Masse und für die negative aktive Masse ist eine beidseitig mit einem isolierenden Kunststoff beschichtete Bleifolie vorgesehen, wobei die Kunststoffschicht auf beiden Seiten Durchbrüche aufweist, die gegeneinander versetzt sind. Die Öffnungsweite der Durchbrüche auf der negativen Seite ist dabei kleiner als die Öffnungsweite der Durchbrüche auf der positiven Seite.

Aus der DE-T1 39 90 832 ist eine bipolare Elektrode für Bleiakkumulatoren bekannt, die einen Schichtträger aus nichtleitendem Material besitzt, der beidseitig mit einem Stromableitgerüst und positiver bzw. negativer aktiver Masse versehen ist. Die beidseitigen Schichten sind durch eine Öffnung im Schichtträger hindurch elektrisch miteinander verbunden.

Diese bekannten Ausführungsformen von bipolaren Elektroden sind aufwendig in der Herstellung, oder es werden aufwendige Materialien verwendet. Es stellt sich daher die Aufgabe, eine einfach herstellbare, kostengünstige bipolare Elektrode für Bleiakkumulatoren anzugeben.

Diese Aufgabe wird erfindungsgemäß bei der eingangs genannten bipolaren Elektrode durch die im Patentanspruch 1 angegebenen Maßnahmen gelöst. Vorteilhafte Weiterbildungen der Erfindung sind in den Unteransprüchen angegeben.

Die Verbindung der Stromableitergerüste, die konventionell gegossene Bleigitter oder Streckmetallgitter sind und die somit einfach und kostengünstig hergestellt werden können, erfolgt durch Verschweißen der beidseitig des nichtleitenden Trägers angeordneten Elektrodengerüste durch eine Öffnung im Träger hindurch. Diese Verschweißung erfolgt mittels einer Schweißzange, die gleichzeitig einen Preßdruck auf die zu vereinigenden Teile ausübt, so daß die Öffnung im nichtleitenden Träger vollständig mit beim Widerstandsschweißen zumindest teilweise schmelzflüssig werdenden Material ausgefüllt wird. Beispielsweise wird beidseitig an entsprechend vorgesehenen Stellen eine Zange angelegt und das weiche Blei der Elektrodengerüste wird in die Öffnung in der nichtleitenden Schicht hineingedrückt, so daß es zu einer ersten, kleinflächigen Kontaktierung zwischen den Elektrodengerüsten im Zentrum der Öffnung kommt. Der hohe Anfangswiderstand dieses Kontaktes führt zu einer raschen Aufheizung des Bleimaterials in diesem Bereich durch den fließenden Strom. Unter dem weiter anhaltenden Druck der Schweißzange bildet sich schließlich eine den gesamten Öffnungsquerschnitt erfassende Schmelzzone aus, die nach Abschalten des Stromes rasch erstarrt und so die bipolare Verbindungsstrecke bildet. Dieses Verfahren des sogenannten Extrusions- und Widerstands-Schweißens ist bekannt und wird in der Batterieindustrie dazu verwendet, die Polbrücken mehrerer Akkumulatorenzellen in einem Blockkasten elektrolytdicht durch die Zellwände hindurch zu verbinden.

Damit erfüllt die erfindungsgemäße bipolare Elektrode zwei wesentliche Voraussetzungen, die für eine praktische Umsetzung zu einem Hochleistungsakkumulator eine notwendige Voraussetzung sind:
- die Elektrode läßt sich einfach und mit in der Batterieindustrie bewährten Bauteilen sowie Prozessen herstellen
- durch die vorteilhafte Gitterstruktur auf beiden Seiten eines nichtleitfähigen Trägers ist der Nachteil der schlechten Haftung der aktiven Massen auf einem üblicherweise großflächigen Foliensubstrat eliminiert.

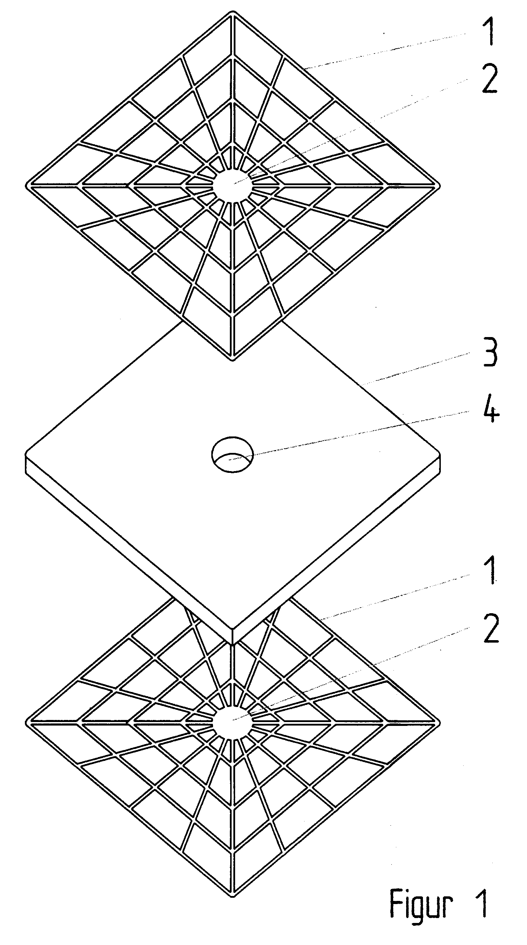

Die für bipolare Batteriekonstruktionen charakteristische Eigenschaft eines sehr niedrigen Innenwiderstandes stellt sich bei der erfindungsgemäßen bipolaren Elektrode dadurch ein, daß der oder die Widerstandsschweißpunkte jeweils an die Stellen des Stromableitergerüsts bzw. Elektrodengitters gelegt werden, die den minimalen effektiven Gitterwiderstand aufweisen. Bei einem quadratischen Gitter mit strahlenförmigen Stegen ist dies zum Beispiel das Zentrum der Platte. Die Figur 1 zeigt zum Beispiel eine bipolare Elektrode mit Stromableitergerüst in Form eines strahlenförmigen Gitternetzes in einer geschnittenen Schrägansicht.

In Figur 1 ist ein Gußgitter 1 mit einem strahlenförmigen Elektrodengitter aus einer PbSb- oder PbCa- oder einer anderen Bleilegierung bzw. Feinblei dargestellt. Dieses Elektrodengitter hat im Zentrum einen Stromsammelpunkt 2 (entsprechend der 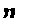 Fahne" im herkömmlichen Gitter) verstärkt ausgebildet. Über diese Fläche läuft später der Widerstands-Schweißprozeß ab. Die Kunststoffplatte 3, bestehend beispielsweise aus PE oder PP hat an einer zentralen Stelle ein Loch 4, durch welches die Stromsammelpunkte 2 der beiden gegenüberliegenden Elektrodengitter 1 zunächst verpreßt und unmittelbar darauf folgend mit Hilfe eines Stromimpulses verschweißt werden.

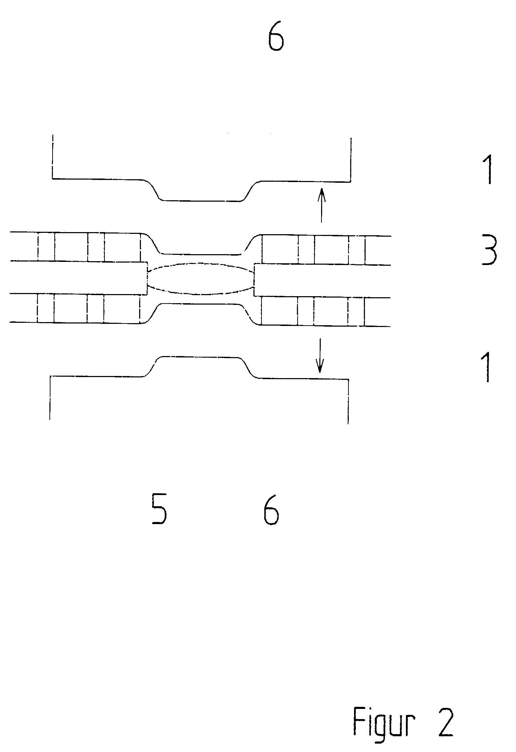

Figur 2 zeigt im Querschnitt die Einzelheit der bipolaren Verbindungszone, die durch die Widerstandsschweißung entstanden ist. Die schraffierte Zone 5 stellt etwa den Bereich dar, in dem das Blei der beiden Elektrodengitter 1 durch den Stromimpuls aufgeschmolzen war und so die notwendige elektrolytische Abdichtung der beiden bipolaren Zellräume bewirkt. Das Zangenwerkzeug, mit welchem die Extrusions-Widerstandsschweißung durchgeführt wird, ist mit 6 bezeichnet.

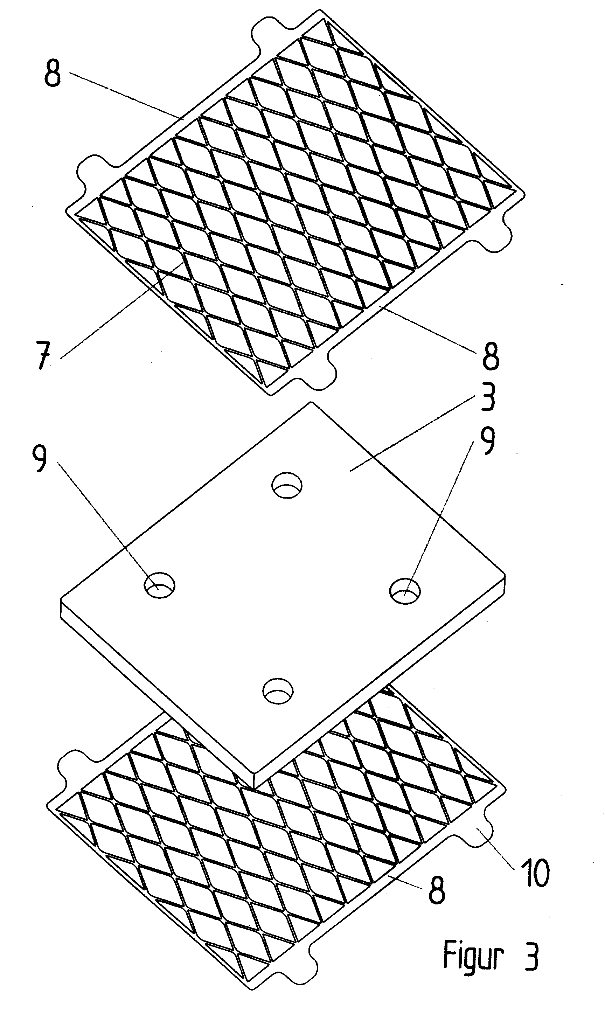

Eine andere vorteilhafte Ausführungsform der Erfindung zeigt die Figur 3. Hier sind die Stromableitergerüste 7 bzw. Elektrodengitterelemente nach dem besonders kostengünstigen kontinuierlichen Streckverfahren hergestellt worden. Gegenüber einem gegossenen Gitter hat jedoch das Streckgitter 7 den Nachteil, daß es aufgrund der fest vorgegebenen Rautenstruktur einen beinahe um den Faktor 2 höheren Gitterwiderstand hat, welches sich nachteilig auf den Innenwiderstand einer Batterie auswirkt. Dieser Nachteil läßt sich aber gemäß der vorliegenden Erfindung mehr als überkompensieren, indem das Streckmetallgitter 7 auf beiden längs zur Streckrichtung verlaufenden Seiten der Rautenstruktur mit einer Stromsammelschiene 8 versehen ist, welche vorzugsweise mit fahnenartigen Vorsprüngen 10 an den vorgesehenen Schweißstellen versehen ist.

Dadurch allein ist bereits der Gitterwiderstand nahezu halbiert und in der Größenordnung eines Gußgitters. Werden entsprechend der Figur 3 die bipolaren Verbindungen beispielsweise an vier Punkten 8 durch die Kunststoffplatte 3 erzeugt, wird eine weitere Verringerung des Widerstandes erreicht.

Die bipolare Trägerstruktur entsprechend Figur 1 und 3 wird anschließend auf einer Seite mit positiver und auf der anderen Seite mit negativer aktiver Masse pastiert. Damit ist das Grundelement für eine bipolare Platte geschaffen. Entsprechend dem bekannten Aufbau eines bipolaren Akkumulators wird durch Stapeln dieser bipolaren Platten unter Zwischenlage eines geeigneten Scheiders ein Elektrodenpaket gebildet und mit je einer monopolaren Endplatte abgeschlossen.

## Patentansprüche

1. Bleiakkumulator mit bipolaren Elektroden, bestehend aus einem Träger aus elektrisch nichtleitendem Material mit Öffnungen, durch die ein positives Stromableitergerüst auf einer Seite des Trägers mit dem negativen Stromableitergerüst auf der anderen Seite des Trägers leitend verbunden ist und bei dem die beiden Seiten des Trägers mit einer einpastierten positiven bzw. negativen Masse versehen sind, dadurch gekennzeichnet, daß die leitenden Stromableitergerüste aus einer gegossenen Gitterstruktur oder einem Bleistreckmetall bestehen und daß die leitfähigen Stromableitergerüste durch mindestens eine Öffnung des nichtleitenden Trägers hindurch miteinander verschweißt sind.

2. Bleiakkumulator nach Anspruch 1, dadurch gekennzeichnet, daß die Stromableitergerüste durch mindestens eine Öffnung der nichtleitenden Träger hindurch durch Widerstandsschweißung untereinander verbunden sind.

3. Bleiakkumulator nach den Ansprüchen 1 oder 2, dadurch gekennzeichnet, daß die Verbindungsstelle etwa in der Mitte der Stromableitergerüste angeordnet ist.

4. Bleiakkumulator nach den Ansprüchen 1 oder 2, dadurch gekennzeichnet, daß die Stromableitergerüste Streckmetallgitter sind, die an ihren längs zur Streckrichtung verlaufenden Kanten mit Sammelschienen versehen sind und daß die Sammelschienen durch Öffnungen im nichtleitenden Träger untereinander elektrisch verbunden sind.
